# EUROPEAN PATENT SPECIFICATION

(11) **EP 0 412 564 B1**
(45) Date of publication and mention of the grant of the patent: **06.12.1995**
(21) Application number: 90115410.4
(22) Date of filing: 10.08.1990
(51) Int. Cl.: C08L 83/05, C09D 183/05, C08J 3/24, C08G 77/38

(54) **Process of curing methylhydrosiloxanes**
Verfahren zur Vernetzung von Methylwasserstoffpolysiloxanen
Procédé de durcissement de méthylhydrogénosiloxanes

(30) Priority: 11.08.1989 US 392320
(43) Date of publication of application: 13.02.1991
(73) Proprietor: DOW CORNING CORPORATION, Midland Michigan 48686-0994 (US)
(72) Inventor: Revis, Anthony, Freeland, Michigan (US)
(74) Representative: Spott, Gottfried, Dr.

(56) References cited:
- EP-A- 0 004 074
- EP-A- 0 029 162
- EP-A- 0 066 137
- EP-A- 0 130 731
- EP-A- 0 205 932
- EP-A- 0 254 050
- US-A- 4 378 459

## Description

This invention relates to a process of curing and crosslinking methylhydrogensiloxanes by contacting and forming a mixture of an allyl ester with at least one methylhydrogensiloxane in the presence of a Group VIII metal catalyst and heating the mixture of the allyl ester, the methylhydrogensiloxane and the Group VIII metal catalyst in the presence of ambient moisture until the methylhydrogensiloxane becomes cured and crosslinked.

EP-A 0 004 074 describes a process for preparing polyorganosiloxanes having SiC-bound ester groups which have been prepared by reacting silanes with a diester thereby obtaining liquid organosiloxanes which are used as oils or hydraulic liquids.

EP-A 0 066 137 discloses liquid crystalline organopolysiloxanes wherein the polysiloxanes have been obtained by reacting an organohydrogen polysiloxane and a mixture of vinyl substituted mesogenic molecules and vinyl endblocked polysiloxanes. Acrylic acid or methacrylic acid allylesters or allyl-epoxy-propylethers are used as crosslinkers. The resulting bifunctional system has to be cured with free radicals or with high-energy radiation.

EP-A 0 205 932 discloses a method for the production of acetoxy siloxanes or organopolysiloxanes carrying directly silicon bonded halogen atoms. These materials are used to prepare organopolysiloxanes having organofunctional groups or used for the introduction of protective groups in organic chemistry.

EP-A 0 130 731 describes methacrylated siloxanes which are prepared by hydrosilylation of beta(allyloxy)ethyl methacrylate using a silicone hydride functional siloxane wherein the reaction is carried out at a temperature below about 100°C and in a moisture protected flask.

The present invention is concerned with a process of curing and crosslinking methylhydrogensiloxanes comprising contacting and forming a mixture of an allyl ester selected from allyl butyrate, allyl acetate, allyl methacrylate, vinyl acetate, allyl acrylate and vinyl butyrate, with at least one methylhydrogensiloxane selected from bis(trimethylsiloxy)dimethyldisiloxane, bis(trimethylsiloxy)methylsilane, diphenyldimethyldisiloxane, diphenyltetrakis(dimethylsiloxy)disiloxane, heptamethyltrisiloxane, hexamethyltrisiloxane, methylhydrogencyclosiloxanes, methyltris(dimethylsiloxy)silane, octamethyltetrasiloxane, pentamethylcyclopentasiloxane, pentamethyldisiloxane, phenyltris(dimethylsiloxy)silane, polymethylhydrogensiloxane, tetrakis(dimethylsiloxy)silane, tetramethylcyclotetrasiloxane, tetramethyldisiloxane and methylhydrogendimethylsiloxane copolymers in the presence of a group VIII metal catalyst and heating the mixture of the allyl ester, the methylhydrogensiloxane and the group VIII metal catalyst to a temperature above 125°C in the presence of ambient moisture until the methylhydrosiloxane becomes cured and crosslinked.

In a preferred embodiment according to the present invention there is included in the mixture at least one chemically inert polyorganosiloxane endblocked by trimethylsilyl groups and having a viscosity in the range of 20 to 2 000 000 m²/s in addition to the methylhydrogensiloxane and the methylhydrogensiloxane is cured and crosslinked entrapping the chemically inert polyorganosiloxane.

In the process, the mixture of the allyl ester, the methylhydrogensiloxane and the Group VIII metal catalyst is heated at a temperature above 125°C. There may also be included in the mixture at least two methylhydrogensiloxanes. In addition, the mixture may include at least one chemically inert polyorganosiloxane in addition to the methylhydrogensiloxane.

With the process of the present invention a methylhydrogensiloxane is cured and crosslinked in accordance with the method as described above and wherein the cured and crosslinked methylhydrogensiloxane is formed into the shape of a film. The methylhydrogensiloxane film may be coated on the surface of a substrate such as aluminum, paper, polyesters, polycarbonates and acrylics.

A mixture of at least one chemically inert polyorganosiloxane and a cured and crosslinked methylhydrogensiloxane is prepared in accordance with the above described method and wherein the chemically inert polyorganosiloxane is entrapped by the cured and crosslinked methylhydrogensiloxane. A methylhydrogensiloxane cured and crosslinked in accordance with this method is also disclosed and wherein the cured and crosslinked methylhydrogensiloxane is prepared in bulk. For purposes of the present invention, "bulk" is defined as curing in a container to a depth in excess of about 3,2 mm (one-eighth of an inch). Cured and crosslinked mixtures of at least two methylhydrosiloxanes are further described herein.

These and other features, objects and advantages of the herein described invention will become more apparent when considered in light of the accompanying detailed description thereof.

As noted hereinabove, the present invention concerns a process of curing and crosslinking methylhydrosiloxanes by contacting and forming a mixture of an allyl ester with at least one methylhydrosiloxane in the presence of a Group VIII metal catalyst and heating the mixture of the allyl ester, the methylhydrosiloxane and the Group VIII metal catalyst at a temperature of 125°C to 175°C in the presence of ambient moisture until the methylhydrosiloxane becomes cured and crosslinked.

The allyl ester employed in the process is allyl butyrate, allyl acetate, allyl methacrylate, vinyl acetate, allyl acrylate, or vinyl butyrate. The siloxanes which are used in the present invention are methylhydrogensiloxanes are selected from bis(trimethylsiloxy)dimethyldisiloxane, bis(trimethylsiloxy)methylsilane, diphenyldimethyldisiloxane, diphenyltetrakis(dimethylsiloxy)disiloxane, heptamethyltrisiloxane, hexamethyltrisiloxane, methylhydrogencyclosiloxanes, methyltris(dimethylsiloxy)silane, octamethyltetrasiloxane, pentamethylcyclopentasiloxane, pentamethyldisiloxane, phenyltris(dimethylsiloxy)silane, polymethylhydrogensiloxane, tetrakis(dimethylsiloxy)silane, tetramethylcyclotetrasiloxane, tetramethyldisiloxane and methylhydrogendimethylsiloxane copolymers.

The preferred Group VIII metal catalyst is RhCl₃, although other appropriate catalyst systems may be employed such as ClRh(PPh₃)₃; H₂PtCl₆; a complex of 1,3-divinyl tetramethyl disiloxane and H₂PtCl₆; and alkyne complexes of H₂PtCl₆. A more exhaustive list of appropriate catalyst systems is set forth in U.S. Patent No. 4,746,750. The most effective concentration of the Group VIII metal catalyst has been found to be from about ten parts per million to about two thousand parts per million on a molar basis relative to the allyl ester.

As used herein, the term chemically inert polyorganosiloxane is intended to denote a polymer of the formula 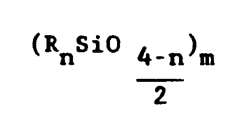
wherein n is an integer between zero and three and m is two or more. The simplest silicone materials are the polydimethylsiloxanes. Polydimethylsiloxanes have the structure 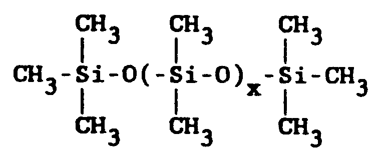
where x is an integer of from one to about one hundred thousand. The repeating unit of the polymer 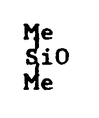
is the dimethylsiloxane unit. The terminal unit (Me₃SiO) is the trimethylsiloxy group. At low molecular weights, silicones are fluids and at high molecular weights, they are gums which may be cross linked to form elastomeric products. The methyl group in a silicone may be substituted by a variety of other substituents including, for example, phenyl or ethyl. Conventional silicones are the trimethylsiloxy terminated polydimethylsiloxanes. Such materials are available in viscosities ranging from 0.65 to 2,500,000 mm²/s (centistokes). Substituents on the silicon consist of methyl groups. Termination of the polymer chain prevents viscosity change and other alterations of the physical properties of the silicone polymeric materials. The polydimethylsiloxanes exhibit characteristic properties of low viscosity change with temperature; thermal stability; oxidative stability; chemical inertness; non-flammability; low surface tension; high compressibility; shear stability; and dielectric stability.

The polydimethylsiloxane fluid used herein as the chemically inert polyorganosiloxane is a high molecular weight polymer having a molecular weight in the range from 200 to 200,000 and has a viscosity in the range from 20 to 2,000,000 mm²/s (centistokes), preferably from 500 to 50,000 mm²/s (centistokes), more preferably about 50 mm²/s (centistokes) at 25°C. The siloxane polymer is generally endblocked with trimethylsilyl groups but other endblocking groups are also suitable. The polymer can be prepared by various techniques such as the hydrolysis and subsequent condensation of dimethyldihalosilanes or by the cracking and subsequent condensation of dimethylcyclosiloxanes.

For purposes of the present invention, the term "skinned over" is defined as curing to a solid film on top of a fluid that can be touched and which does not leave a visibly wet residue, which is not tacky, but which is not fully cured. "Cured" is defined as the formation of a solid film that does not leave a visibly wet residue when touched. "Cheesy" is defined as a cured solid that when rubbed has the texture of cheese. "Tacky" is defined as cured to a gelatinous texture that adheres to the fingers when touched. "Orange peel" is defined as cured to a clear undulant appearance. "Spongy" is defined as cured to a porous solid.

Following are several examples illustrating the process of the present invention as well as the various products produced in accordance with the present invention. For the sake of simplicity, tetrahydrofuran has been referred to as THF.

### Example I

A catalyst was prepared by stirring 10 gm of RhCl₃ 3H₂O in 1200 gm of THF at room temperature for 12 hours. This catalyst was employed in the examples unless otherwise specified. A solution of 20 g of polymethylhydrosiloxane having a viscosity of about thirty centistokes, hereinafter referred to as PMHS, 2 g of allyl acetate and 0.2 g catalyst was prepared and about 30 drops of this cloudy, yellow fluid was used to coat the bottom of a 5,1 cm (2 inch) aluminum weighing pan. The pan was immediately placed in a 125°C. oven for 5 minutes. Upon removal, the material had cured to a smooth, clear and colorless film.

### Example A (comparative)

A solution of 3.0 g of PMHS and 5 drops of catalyst was poured in a 5,1 cm (2 inch) aluminum weighing pan. The solution was liquid after 10 minutes and was tacky after 20 minutes and had skinned over to a tack free film within 40 minutes.

### Example B (comparative)

To 0.15 g of the Stock A was added 0.75 gm of Me₃SiO(SiMe₂O)₇₀(SiMeHO)₃SiMe₃. The resulting formulation was poured into a 5,1 cm (2 inch) aluminum weighing pan and placed in an oven at 126°C. The material was tacky after 60 minutes.

### Example II

To 0.15 g of Stock A (Stock A = a solution of 3,0 g Si(OSiMe₂H)₄, 0,6 g allyl acetate and 0.3 g catalyst) was added 0.75 g of Me₃SiO(SiMe₂O)₁₀₀(SiMeHO)₉SiMe₃. The resulting formulation was poured into a 5,1 cm (2 inch) aluminum weighing pan and placed in an oven at 126°C. The material skinned over in 10 minutes and was fully cured in 60 minutes providing a smooth film.

### Example III

A portion of the solution from Example I was applied to super calendared Kraft paper with a No. 8 wire wound rod and cured in an oven at 125°C. for 5 minutes. This provided a cured coating of a thickness of about 0,3 kg (0.6 lbs)/ream which showed good adhesive release.

### Example IV

A portion of the solution from Example I was applied to MYLAR polyethylene terephthalate with a No. 8 wire wound rod and cured in an oven at 125°C. for 5 minutes. This provided a cured coating which showed good adhesive release.

### Example V

A portion of the solution from Example I was applied to an isopropanol cleaned Lexan polycarbonate plate which was placed in a 125°C. oven for 10 minutes. Upon removal, the plate cured to a smooth film.

### Example VI

A portion of the solution from Example I was applied to an isopropanol cleaned Plexiglass G acrylic plate and allowed to remain in a 125°C. oven for 10 minutes at which time curing occurred, although a slight warping of the acrylic plate was apparent.

## Claims

1. A process of curing and crosslinking methylhydrogensiloxanes comprising contacting and forming a mixture of an allyl ester selected from allyl butyrate, allyl acetate, allyl methacrylate, vinyl acetate, allyl acrylate and vinyl butyrate, with at least one methylhydrogensiloxane selected from bis(trimethylsiloxy)dimethyldisiloxane, bis(trimethylsiloxy)methylsilane, diphenyldimethyldisiloxane, diphenyltetrakis(dimethylsiloxy)disiloxane, heptamethyltrisiloxane, hexamethyltrisiloxane, methylhydrogencyclosiloxanes, methyltris(dimethylsiloxy)silane, octamethyltetrasiloxane, pentamethylcyclopentasiloxane, pentamethyldisiloxane, phenyltris(dimethylsiloxy)silane, polymethylhydrogensiloxane, tetrakis(dimethylsiloxy)silane, tetramethylcyclotetrasiloxane, tetramethyldisiloxane and methylhydrogendimethylsiloxane copolymers in the presence of a group VIII metal catalyst and heating the mixture of the allyl ester the methylhydrogensiloxane and the group VIII metal catalyst at a temperature of 125°C to 175°C in the presence of ambient moisture until the methylhydrosiloxane becomes cured and crosslinked.

2. The process according to claim 1 wherein there is included in the mixture at least one chemically inert polyorganosiloxane endblocked by trimethylsilyl groups and having a viscosity in the range of 20 to 2 000 000 mm²/s at 25°C in addition to the methylhydrogensiloxane and the methylhydrogensiloxane is cured and crosslinked entrapping the chemically inert polyorganosiloxane.

## Patentansprüche

1. Verfahren zum Härten und Vernetzen von Methylhydrogensiloxanen, umfassend, daß man eine Mischung aus einem Allylester ausgewählt aus Allylbutyrat, Allylacetat, Allylmethacrylat, Vinylacetat, Allylacrylat und Vinylbutyrat mit mindestens einem Methylhydrogensiloxan ausgewählt aus Bis(trimethylsiloxy)dimethyldisiloxan, Bis(trimethylsiloxy)methylsilan, Diphenyldimethyldisiloxan, Diphenyltetrakis(dimethylsiloxy)disiloxan, Heptamethyltrisiloxan, Hexamethyltrisiloxan, Methylhydrogencyclosiloxanen, Methyltris(dimethylsiloxy)silan, Octamethyltetrasiloxan, Pentamethylcyclopentasiloxan, Pentamethyldisiloxan, Phenyltris(dimethylsiloxy)silan, Polymethylhydrogensiloxan, Tetrakis(dimethylsiloxy)silan, Tetramethylcyclotetrasiloxan, Tetramethyldisiloxan und Methylhydrogendimethylsiloxancopolymeren in Gegenwart eines Metallkatalysators der Gruppe VIII in Kontakt bringt und daraus eine Mischung formt und die Mischung aus Allylester, Methylhydrogensiloxan und Metallkatalysator der Gruppe VIII auf eine Temperatur von 125°C bis 175°C in Gegenwart von Umgebungsfeuchtigkeit erwärmt, bis das Methylhydrogensiloxan gehärtet und vernetzt ist.

2. Verfahren nach Anspruch 1, worin in der Mischung mindestens ein chemisch inertes Polyorganosiloxan mit Trimethylsilylendgruppen mit einer Viskosität im Bereich von 20 bis 2.000.000 mm²/s bei 25°C zusätzlich zu dem Methylhydrogensiloxan enthalten ist und das Methylhydrogensiloxan gehärtet und vernetzt wird, indem das chemisch inerte Polyorganosiloxan eingeschlossen wird.

## Revendications

1. Un procédé de durcissement et réticulation de méthylhydrogénosiloxanes, consistant à mettre en contact et former un mélange d'un ester d'allyle choisi parmi le butyrate d'allyle, l'acétate d'allyle, le méthacrylate d'allyle, l'acétate de vinyle, l'acrylate d'allyle et le butyrate de vinyle, avec au moins un méthylhydrogénosiloxane choisi parmi le bis(triméthylsiloxy)diméthyldisiloxane, le bis(triméthylsiloxy)méthylsilane, le diphényldiméthyldisiloxane, le diphényltétrakis(diméthylsiloxy)disiloxane, l'heptaméthyltrisiloxane, l'hexaméthyltrisiloxane, les méthylhydrogénocyclosiloxanes, le méthyltris(diméthylsiloxy)silane, l'octaméthyltétrasiloxane, le pentaméthylcyclopentasiloxane, le pentaméthyldisiloxane, le phényltris(diméthylsiloxy)silane, un polyméthylhydrogénosiloxane, le tétrakis(diméthylsiloxy)silane, le tétraméthylcyclotétrasiloxane, le tétraméthyldisiloxane et les copolymères de méthylhydrogénodiméthysiloxane en présence d'un catalyseur contenant un métal du Groupe VIII et à chauffer le mélange de l'ester d'allyle, du méthylhydrogénosiloxane et du catalyseur contenant un métal du Groupe VIII à une temperature de 125°C à 175°C en présence d'humidité ambiante jusqu'à ce que le méthylhydrosiloxane soit durci et réticulé.

2. Le procédé selon la revendication 1, dans lequel est inclus dans le mélange au moins un polyorganosiloxane chimiquement inerte à extrémités bloquées par des groupes triméthylsilyle et ayant une viscosité comprise dans l'intervalle de 20 à 2 000 000 mm²/s à 25°C, en plus du méthylhydrogénosiloxane, et le méthylhydrogénosiloxane est durci et réticulé en emprisonnant le polyorganosiloxane chimiquement inerte.
